# EUROPEAN PATENT APPLICATION

(11) **EP 4 717 909 A1**
(43) Date of publication of application: **01.04.2026**
(21) Application number: 24203123.5
(22) Date of filing: 27.09.2024
(51) Int. Cl.: F03D 13/40

(54) **TRANSPORTATION TOOL, TRANSPORTATION ARRANGEMENT, TRANSPORTATION SYSTEM AND METHOD**

(71) Applicant: Nordex Energy SE & Co. KG, 22419 Hamburg (DE)
(72) Inventor: Braasch, Hauke, 22419 Hamburg (DE); Hoppe, Johanna, 22419 Hamburg (DE)
(74) Representative: Epping - Hermann - Fischer

(57) **Abstract**

A transportation tool (200) for a rotor hub (112) of a wind turbine (100) comprises:
- a first fastener (300), the first fastener (300) being configured to be fixed to a first side (113) of the rotor hub (112) and to be coupled with a vehicle (500),
- a second fastener (400), the second fastener (400) being configured to be fixed to a second side (114) of the rotor hub (112) and to be coupled with the vehicle (500), wherein the second side (114) is opposite the first side (113) along a first direction (121), wherein the first fastener (300) and the second fastener (400) are fixable to the rotor hub (112) independently of each other.

## Description

The disclosure relates to a transportation tool for a rotor hub of a wind turbine. The disclosure further relates to a transportation arrangement for a rotor hub of a wind turbine. The disclosure further relates to a transportation system for a rotor hub of a wind turbine. The disclosure further relates to a method for attaching a transportation tool to a rotor hub of a wind turbine.

A wind turbine may include a rotor that includes a rotatable rotor assembly having multiple rotor blades. The rotor blades transform wind energy into a drive torque that drives the generator of the wind turbine via a drive train.

It is desirable to provide a transportation tool, a transportation arrangement, a transportation system and a method for a rotor hub of a wind turbine which each provide a reliable operation.

Embodiments of the disclosure provide a transportation tool for a rotor hub of a wind turbine. Embodiments of the disclosure providing a transportation arrangement for a rotor hub of a wind turbine comprising a transportation tool are described herein. Embodiments of the disclosure provide a transportation system for a rotor hub of a wind turbine comprising a transportation tool as described herein. Embodiments of the disclosure providing a method for attaching a transportation tool to a rotor hub of a wind turbine, in particular a transportation tool, are described herein.

According to an embodiment, the transportation tool comprises a first fastener. The transportation tool comprises a second fastener. The first fastener is configured to be fixed to a first side of the rotor hub. The first fastener is configured to be coupled with a vehicle. The second fastener is configured to be fixed to a second side of the rotor hub. The second fastener is configured to be coupled with the vehicle. The first side and the second side are opposite to each other along a first direction. The first fastener and the second fastener are fixable to the rotor hub independently of each other.

The first fastener and the second fastener each provide a mounting interface to the vehicle. The first and the second fasteners are connectable to the rotor hub on opposite sides so that the rotor hub can be kept stable by the transportation tool and transported by the vehicle. With the transportation tool that comprises the two independent fasteners, it is possible to eliminate the need to place the rotor hub on a truck bed of a truck. The truck bed underneath the rotor hub is avoided and thus height can be saved. For example, due to bridge height restrictions of 4.5 m in central Europe, the total transport height must not exceed 4.3 m. By eliminating the need of a truck bed under the rotor hub, at least 30 additional centimeters can be gained. This means that larger rotor hubs can be transported. For example, a rotor hub for a rotor blade with a larger rotor blade root diameter can be transported and height restrictions can still be adhered to.

The first fastener can be coupled to the first side independent of the second fastener. Thus, the first fastener can be firmly attached to the rotor hub without the second fastener. The second fastener can be firmly attachd to the rotor hub without the first fastener. The first fastener and the second fastener can be mounted in any order. It is possible to mount the second fastener to the rotor hub first, in particular without the first fastener. It is also possible to mount the first fastener first, in particular without the second fastener.

The first direction in particular is a horizontal direction. The first direction, for example, is a main direction of travel of the vehicle during operation. For example, the first fastener is mountable on a forward or backward facing side of the rotor hub. Accordingly, the second fastener is mountable on the other side of the forward or backward facing side of the rotor hub.

According to an embodiment, the first fastener is fixable to an outside of the rotor hub. In particular, the first fastener is fixable to an area of the outside of the rotor hub in between two openings for fixing a rotor blade. In particular, the first fastener is fixable to an area of the outside of the rotor hub used for attaching a crane or another tool during installation of the wind turbine. In particular, the first fastener is fixable to a mechanized area of the rotor hub. For example, the mechanized area is mechanized to make it flat.

According to an embodiment, the first fastener comprises:
- a fixing part for fixing the first fastener to the rotor hub,
- a coupling part for coupling the first fastener with the vehicle, and
- a connecting part, wherein the connecting part is attached to the fixing part and to the coupling part, wherein the fixing part and the coupling part are arranged at a distance from each other along the first direction with the connecting part between the fixing part and the coupling part.

The coupling part in particular comprises two spaced-apart crossbars. Each crossbar comprises recesses which are configured to be coupled to the vehicle. The recesses are configured such that mounting clamps of the vehicle can be attached to the recesses such that the first part is attached to the vehicle via the coupling part. For example, the crossbars extend in a plane to which the first direction is perpendicular. For example, the crossbars are each aligned horizontally, vertically, or diagonally.

According to embodiments, the first fastener and the rotor hub are fixable to each other by a screw connection. For example, the fixing part is fixable to the rotor hub by the screw connection. A plurality of screws can be used to fix the fixing part to the outside of the rotor hub.

According to an embodiment, the second fastener is fixable to an inside of the rotor hub. In particular, the second fastener is fixable to the inside via an opening for fixing a rotor blade. The second fastener is configured to reach from the outside to the inside of the rotor hub. The second fastener is attachable to the inside of the rotor hub and reaches to the outside to be coupled with the vehicle outside of the rotor hub.

According to embodiments, the second fastener comprises a further fixing part for fixing the second fastener to the rotor hub. The second fastener comprises a further coupling part for coupling the second fastener with the vehicle. The further fixing part is configured to be at least partly arranged inside the rotor hub. The further coupling part is configured to be arranged at least partly outside of the rotor hub.

According to embodiments, the further fixing part comprises a fixing bar. The fixing bar comprises an adjustable length. The fixing bar is movable relative to the rotor hub in a shortened state. The fixing bar is fixable to the rotor hub in an extended state. For mounting and demounting, the fixing part is in the shortened state. In its operating position, the length of the fixing bar is extended such that the fixing bar expands in the rotor hub and is clamped in the rotor hub. For example, the length of fixing bar is adjustable like a telescope. For example, the fixing bar comprises a telescopic mechanism.

According to embodiments, the fixing bar comprises a groove at each end to engage a reinforcement element of the rotor hub. The reinforcement element, for example, is arranged at the opening for fixing a rotor blade. The reinforcement element is in contact with the inner ring of the pitch bearing, for example. The fixing bar is mounted to the reinforcement element in the extended state, such that the reinforcement element extends into the recesses of the fixing bar. For example, the reinforcement element is a reinforcement ring. Other shapes of the reinforcement element are also possible.

According to embodiments, the further fixing part comprises a bolt. The bolt is configured to penetrate through a reinforcement element of the hub and to be fixed to the reinforcement element. The reinforcement element in particular is arranged inside the rotor hub at the opening for fixing a rotor blade. The reinforcement element comprises a through hole. The bolt is configured to reach through the through hole from the inside of the reinforcement element to an outwards side of the reinforcement element.

According to embodiments, the further fixing part comprises a support beam. The support beam is attachable to the bolt to fix the support beam to the rotor hub. The support beam is coupled to the further coupling part. Thus, the second fastener is fixable to the rotor hub via the bolts that can be mounted on the reinforcement element.

The second fastener comprising one or more fixing bars and the second fastener comprising one or more bolts and support beams can be alternative embodiments. It is also possible to provide a second fastener that comprises the fixing bar with the adjustable length as well as the bolt and the support beam.

According to embodiments, the transportation arrangement for a rotor hub of a wind turbine comprises a transportation tool according to one of the embodiments described herein. The transportation arrangement further comprises a vehicle. The vehicle comprises a tractor and a trailer. The first fastener is attached to one of the tractor and the trailer. Alternatively or in addition, the second fastener is attached to the other one of the tractor and the trailer.

In particular, the vehicle is a truck that comprises the tractor. The trailer is not in direct contact with the tractor. The tractor and the trailer are coupled to each other via the transportation tool and the rotor hub. The tractor comprises a mounting adapter to fasten the first fastener or the second fastener to the tractor. The trailer comprises a mounting adapter to fasten the other one of the first fastener and the second fastener. For example, the tractor and the trailer can also be used to transport other parts of the wind turbine, for example tower parts. The first fastener and the second fastener are each configured to be mounted to the tractor and the trailer via adjustable mounting adapters.

The transportation system for a rotor hub of a wind turbine comprises the transportation tool according to one of the embodiments described herein. The transportation system further comprises the rotor hub. The first fastener is fixed to the rotor hub. The second fastener is fixed to the rotor hub. The transportation system can be used to transport the rotor hub with the vehicle that comprises the tractor and the trailer. The transportation system can be connected to the tractor and the trailer to transport the rotor hub.

According to an embodiment, the fixing bar extends transverse to an opening for mounting a rotor blade. For example, the transportation tool is configured to transport the rotor hub along the first direction as a main direction of transport. The fixing bar extends transverse to the first direction. The fixing bar extends along a diameter of the opening for mounting the rotor blade. Thus, the fixing bar can be reliably clamped in the rotor hub.

According to an embodiment, the method for attaching a transportation tool to a rotor hub of a wind turbine comprises:
- fixing a first fastener to a first side of the rotor hub, and
- fixing a second fastener to a second side of the rotor hub, wherein the second side is opposite the first side along a first direction, wherein the fixing of the first fastener and the fixing of the second fastener are independent of each other.

In particular, it is possible to mount the first fastener to the rotor hub without the second fastener. The second fastener can be mounted to the rotor hub without the first fastener. Different embodiments of the first fastener and the second fastener can be combined with each other. A combination of two first fasteners without a second fastener is also possible, for example. A combination of two second fasteners without a first fastener is also possible, for example. A modular transportation tool is provided.

The present invention will be further described with reference to the accompanying drawings. In the drawings, elements of the same structure and/or functionality may be referred to by the same reference signs. Embodiments shown in the figures are illustrative representations and are not necessarily drawn to scale.
Figure 1 is a schematic view of a wind turbine according to an embodiment.
Figure 2 is a schematic view of a transportation system according to an embodiment.
Figures 3 and 4 are schematic views of a first fastener according to an embodiment.
Figure 5 is a schematic view of a rotor hub according to an embodiment.
Figure 6 is a schematic view of a transportation system according to an embodiment.
Figures 7 and 8 are schematic views of a second fastener according to an embodiment.
Figure 9 is a schematic view of a transportation system according to an embodiment.
Figure 10 is a schematic view of parts of a transportation system according to an embodiment.
Figures 11 and 12 are schematic views of a second fastener according to an embodiment.
Figures 13 to 18 are schematic views of transportation systems according to different embodiments.
Figures 19 to 22 are schematic views of a transportation system according to an embodiment.

While the invention is amenable to various modifications and alternative forms, specifics thereof have been shown by way of examples in the drawings and will be described in detail. It should be understood, however, that the intention is not to limit the invention to the particular embodiments described. On the contrary, the intention is to cover all modifications, equivalents and alternatives falling within the scope of the invention as defined by the appended claims.

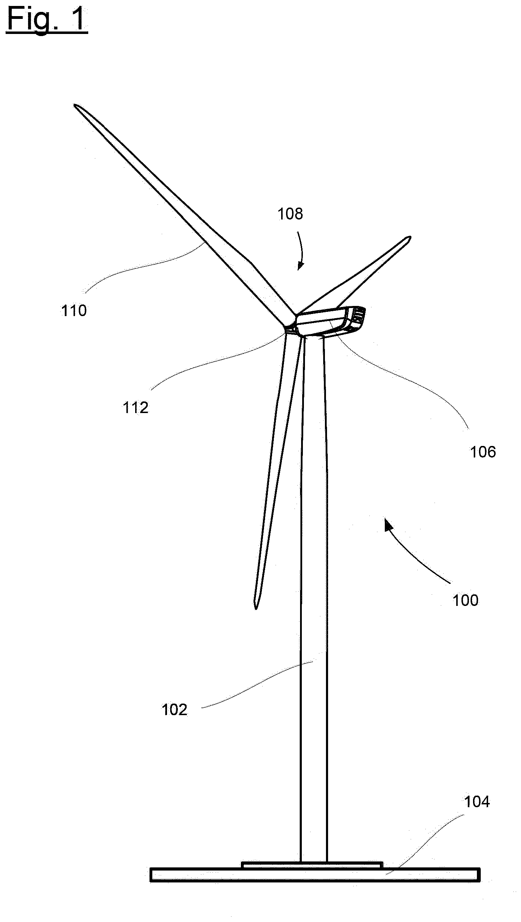

As shown in Figure 1, a wind turbine 100 comprises a tower 102. The tower 102 is connected to a foundation 104 fixed to the ground. Specifically, the foundation 104 is formed at a predetermined depth inside the ground, which is reinforced by a composite structure, for example a concrete support. A nacelle 106 is arranged on a top end of the tower 102 opposite to the foundation 104. The nacelle 106 carries a rotor 108 and houses the drive train among other components and subassemblies. Inside the nacelle 106, for example, a generator is arranged that is connected to the rotor 108 via the drive train. The drive train comprises, for example, a gearbox and a rotor shaft. The rotor 108 comprises several rotor blades 110. The rotor blades are rotatably mounted on a rotor hub 112. The rotor hub 112 is connected to the rotor shaft 105.

For example, the rotor 108 is driven by an airflow interaction of moving wind with the blades of the rotor 108. The rotational movement of the rotor 108 is transmitted via the drive train to the generator. The generator converts the mechanical output of the rotor 108 into electrical energy.

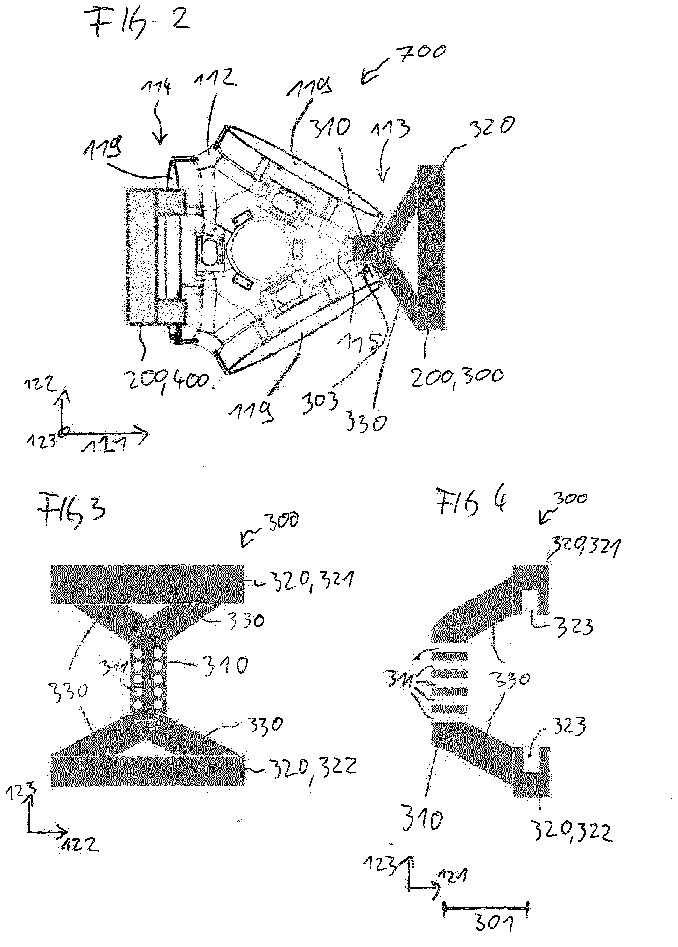

Figure 2 shows a transportation system 700 for transportation of the rotor hub 112 according to an embodiment.

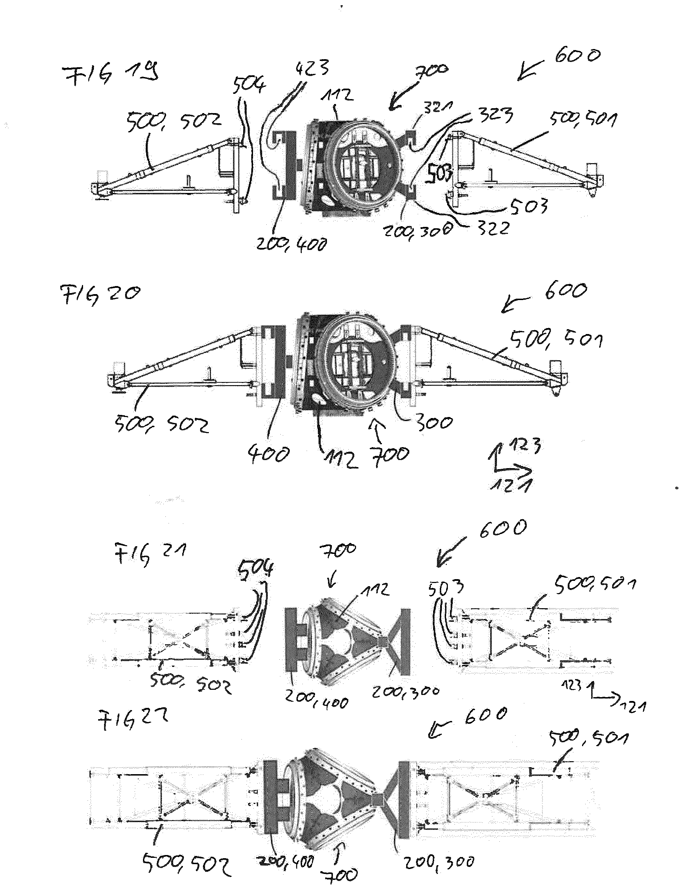

The rotor hub 112, like the other components of the wind turbine 100, must be transported to the wind turbine site. Transportation by road is possible using a vehicle 500 (Figures 19 to 21) like a truck. A transportation tool 200 is provided to attach the rotor hub 112 to the vehicle 500 so that the rotor hub 112 can be transported. In particular, the transportation tool 200 eliminates the need for the rotor hub 112 to be loaded onto a truck bed. Thus, transportation height of the truck bed can be saved. Therefore, it is possible to transport a larger rotor hub 112 with the transportation tool 200 if height restrictions are given. For example, height restrictions are given due to bridges. Using the transportation tool 200, it is possible to arrange the rotor hub 112 free above the ground without a truck bed being between the rotor hub 112 and the ground. For example, the transportation tool 200 is used in combination with a tractor 501 with mounting adapters 503 and in combination with a trailer 502 with further mounting adapters 504 as shown and explained in more detail in connection with Figures 19 to 22.

The transportation tool 200 comprises a first fastener 300 and a second fastener 400. The first fastener 300 and the second fastener 400 are each mountable on the rotor hub 112 to provide an interface to the vehicle 500. The first fastener 300 and the second fastener 400 are not directly linked or connected with each other. The rotor hub 112 is in between the first fastener 300 and the second fastener 400. The first fastener 300 and the second fastener 400 are indirectly connected to each other via the rotor hub 112.

The first fastener 300 is fixed to the rotor hub 112 on a first side 113. The second fastener 400 is fixed to the rotor hub 112 on a second side 114. The first side 113 and the second side 114 are spaced apart along a first direction 121.

The first fastener 300 is mounted on an outside 115 of the rotor hub 112. For example, the first fastener 300 is mounted on the outside 115 between two openings 119 of the rotor hub 112 for fixing a respective rotor blade 110. In particular, the first fastener 300 is mounted at an area of the rotor hub 112, which could also be called "mechanized area". For example, this area is also used for attaching a crane for up-righting the rotor hub 112 after transport when installing it on the nacelle 106.

The second fastener 400 is fixed on an inside 116 of the rotor hub 112. The second fastener 400 reaches through one of the openings 119 for fixing a rotor blade 110. The second fastener 400 is fixed to the rotor hub 112 inside the rotor hub 112 and reaches to the outside 115, such that the second fastener 400 is connectable to the vehicle 500 outside the rotor hub 112.

Figures 3 and 4 schematically show the first fastener 300 according to an embodiment. The first fastener 300 comprises a fixing part 310. The fixing part 310 is configured to be fixed on the outside 115 of the rotor hub 112. For example, the fixing part 310 comprises a plurality of through openings 311. A screw connection 303 is provided for fixing the first fastener 300 to the rotor hub 112. For example, screws (not explicitly shown) extend through the through openings 311 of the fixing part 310 and are screwed into the rotor hub 112.

The first fastener 300 comprises a coupling part 320. The coupling part 320 is configured to be connected to the vehicle 500. The coupling part 320 comprises two parallel spaced-apart crossbars 321, 322. Each of the crossbars 321, 322 comprises one or more recesses 323. The recesses 323 are each provided to interact with corresponding mounting interfaces of the vehicle 500, in particular with mounting adapters 503, 504 as exemplarily shown in Figures 19 and 21.

For example, during operation, the mounting adapters 503, 504 of the vehicle 500 engages the recesses 323 to connect the first fastener 300 and the vehicle 500. The recesses 323 of the crossbar 321 are open towards the other crossbar 322. The recesses 323 of the crossbar 322 are open towards the other crossbar 321. Thus, the recesses 323 are open on the sides facing each other. Thus, the adapter of the vehicle 500 can be inserted in the centre between the crossbars 321, 322 and hooked to the outside to engage the recesses 323.

The first fastener 300 comprises a connecting part 330. The connecting part 330 connects the fixing part 310 and the coupling part 320 together at a distance 301 along the first direction 122. The connecting part 330, for example, comprises connecting rods to provide the fixing part 310 and the coupling part 320 at the distance 301 to each other. Thus, the fixing part 310 for fixing the first fastener 300 with the rotor hub 112 and the coupling part 320 for attaching the first fastener 300 with the vehicle 500 are spaced apart for good and reliable handling. The crossbars 321, 322 in particular are aligned along a second direction 122 which is perpendicular to the first direction 121 and in particular extends horizontally. The crossbars 321, 322 are spaced apart along a third direction 123 that is perpendicular to the first direction 121 and to the second direction 122. For example, the third direction 123 extends vertically.

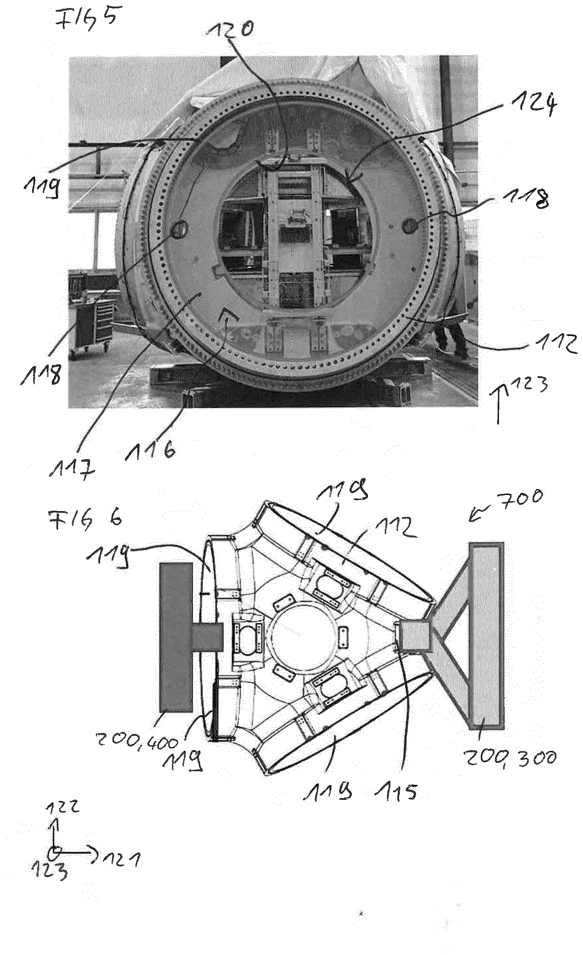

Figure 5 shows a schematic view of the rotor hub 112 and in particular into the inside 116 through the opening 119 for fixing one of the rotor blades 110.

A reinforcement element 117 is provided at the opening 119 inside the rotor hub 112. The reinforcement element 117 is fixed to the rotor hub 112 for reinforcing the opening 119. In the figures, the reinforcing element is exemplified as a reinforcement ring 117.

The reinforcement ring 117 comprises an inner ring wall 120 which surrounds a centre opening 124 of the reinforcement ring 117. The reinforcement ring 117 further comprises two through holes 118. More or less through holes 118 can be provided according to further embodiments. The through holes 118 are arranged beside the centre hole. The through holes 118 are each smaller than the centre hole.

Figure 6 schematically shows the transportation system 700 with a second fastener 400 according to an embodiment.

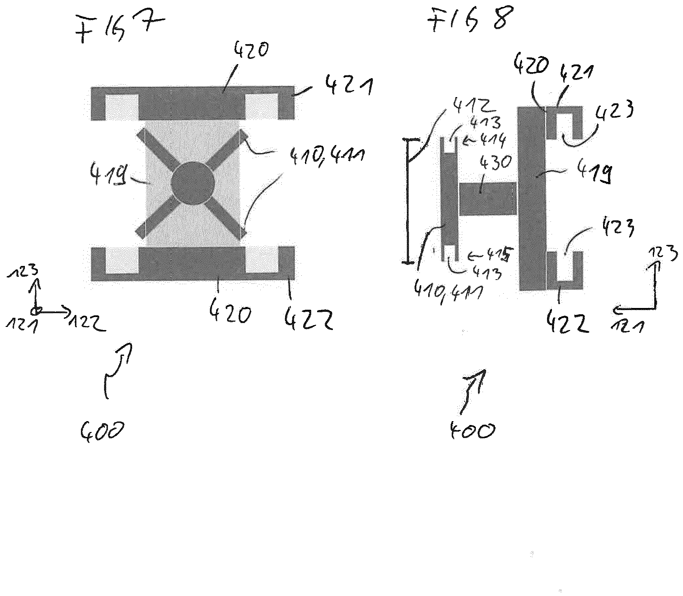

Figures 7 and 8 schematically shows the second fastener 400 according to the embodiment of Figure 6.

The second fastener 400 comprises a further fixing part 410. The further fixing part 410 is configured to be mounted on the reinforcement ring 117, in particular on the inner ring wall 120. The further fixing part 410 comprises two fixing bars 411. The fixing bars 411 are arranged in a crossed pattern. In a mounted state, the fixing bars 411 are arranged perpendicular to the first direction 121 and extend transverse to the opening 119 and the centre opening 124 of the reinforcement ring 117. The fixing bars 411 extend radially with respect to the opening 119.

Each fixing bar 411 comprises a groove 413 at a first end 414 and a groove 413 at an opposite second end 415. The grooves 413 are each configured to engage the reinforcement ring 417 in particular the inner ring wall 120. The fixing bar 411 can be attached to the inner ring wall 120 with the grooves 413. The fixing bar 411 engages the inner ring wall 120 with the grooves 430.

Each of the fixing bars 111 comprises a variable length 412. The length 412 of the fixing bar 411 can be shortened and extended. The fixing bar 411 can be mounted and demounted with the shortened length 412. In its operating position in the centre opening 124 at the inner ring wall 120, the length 412 is extended until the inner ring wall 120 and the grooves 413 engage with each other to fix the fixing bar 411 at the reinforcement ring 117.

The second fastener 400 comprises a further coupling part 420. The further coupling part 420 is configured to be attached to the vehicle 500. The further coupling part 420, for example, comprises parallel crossbars 421, 422 corresponding to the crossbars 321, 322 of the first fastener 300. The further crossbars 421, 422 of the further coupling part 420 comprises further recesses 423 to engage an adaptor of the vehicle 500 in a manner corresponding to the above explained with respect to the coupling part 320 of the first fastener 300.

The second fastener 400 comprises a further connecting part 430. The further connecting part 430 connects the further fixing part 410 and the further coupling part 420. For example, the further connecting part 430 connects the fixing bars 411 and the further coupling part 420 with each other. The further connecting part 430 extends from the inside 116 to the outside 115 in a mounted state of the second fastener 400. Thus, it is possible to fix the second fastener 400 at the inside 116 at the reinforcement ring 117 and to attach the second fastener 400 to the vehicle 500 outside of the rotor hub 112.

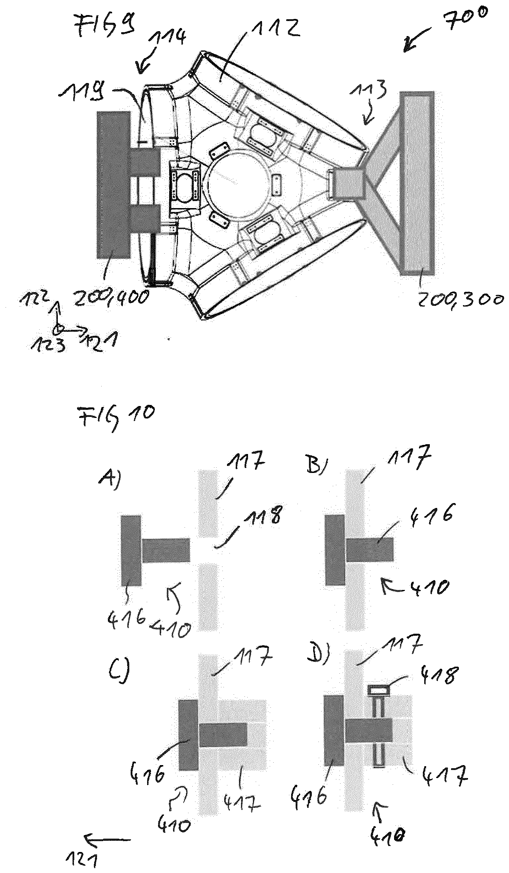

Figure 9 schematically shows the transportation system 700 according to a further embodiment. In particular, the first fastener 300 is of the same type as explained above. The second fastener 400, for example, is configured differently to the one explained above, in particular the further fixing part 410. For example, the further coupling part 420 is configured correspondingly to the further coupling part 420 explained above.

Figure 10 shows a mounting of the second fastener 400 at reinforcement ring 117. A bolt 416 is inserted into the through hole 118 such that it extends through the reinforcement ring 117 as shown in Figure 10B.

A support beam 417 which also acts like the further connecting part 430 can be attached to the bolt 416. The support beam 417 is attached to the bolt 416 protruding in the direction towards the outside 115. For example, the reinforcement ring 117 comprises two through holes 118 as shown in Figure 5. One bolt 416 is inserted in each of the through holes 118. The support beam 417 is attached to both bolts 416. The support beam 417 extends over both projecting bolts 416, in particular along the second direction 122.

A locking pin 418 or a plurality of locking pins 41 is provided to secure the support beam 417 at the bolts 416. Thus, the second fastener 400 is fixed to the reinforcement ring 117 via the bolts 416 and the support beam 417.

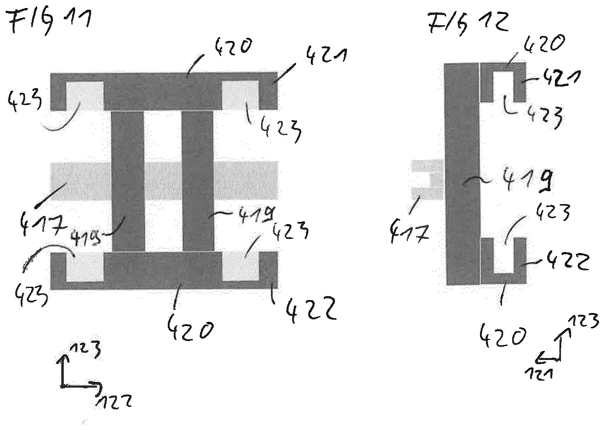

Figures 11 and 12 schematically show the second fastener 400 with the support beam 117 that can be fixed to the bolts 416 as explained above. The further crossbars 421, 422 are attached to the support beam 417 via one or more bars 419. In particular, the further crossbar 421, 422 as well as the support beam 417 extend parallel to each other along the second direction 122. The support beam 417 is arranged between the further crossbars 421, 422 along the third direction 123.

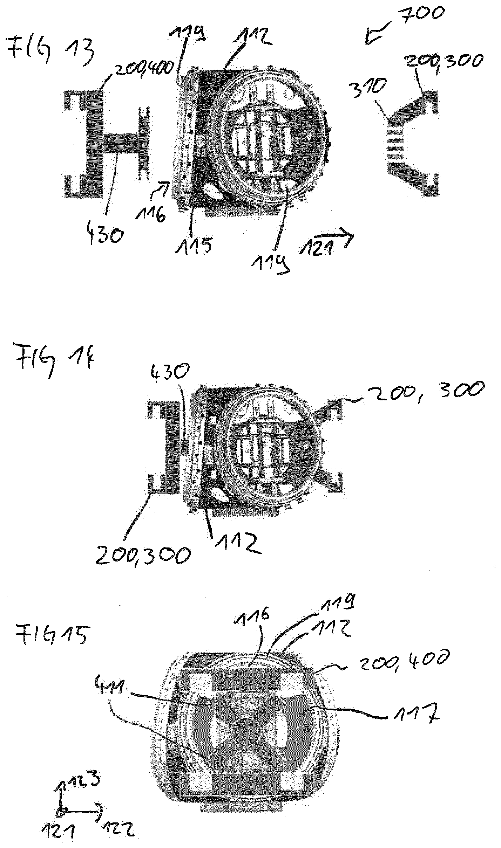

Figures 13 to 15 schematically show the mounting of the transportation tool 200 to the rotor hub 112 according to an embodiment.

For example, the second fastener 400 is configured according to the embodiment as explained with respect to Figures 6 to 8.

As shown in Figure 13, the first fastener 300 and the second fastener 400 are provided independently of each other. The rotor hub 112 is provided in a transport position, i.e. rotated at approximately 90° to the operating position. A mounting interface for the rotor shaft points downwards.

Figure 14 shows the first fastener 300 mounted on the outside 115 of the rotor hub 112. The second fastener 400 is fixed to the reinforcement ring 117 (Figure 15) inside the rotor hub 112. The further connecting part 413 extends outwards such that the further coupling part 420 is arranged outside the rotor hub 112.

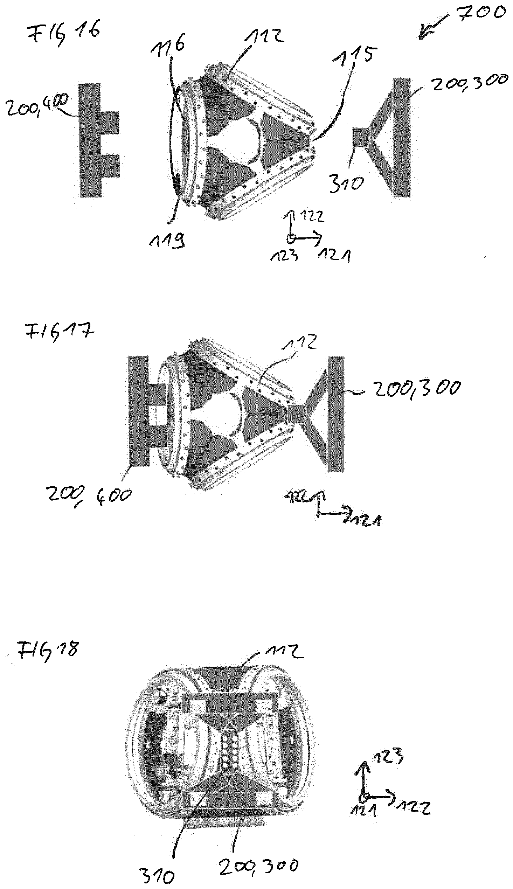

Figures 16 to 18 schematically show the mounting of the transportation tool 200 according to an embodiment. For example, the second fastener 400 is configured as explained with respect to Figures 9 to 12.

The bolts 416 are inserted into the corresponding through holes 118 from the inside 116 towards the outside 115 as shown in Figure 10. Afterwards, the support beam 417 is fixed to the bolts 516, such that the second fastener 400 is fixed to the rotor hub 112 as shown in Figure 17. The first fastener 300 is attached to the outside 115 of the rotor hub 112 as shown in Figure 18. Screws are inserted through the through openings 311 and screwed to the rotor hub 112.

Figures 19 to 22 schematically show a transportation arrangement 600 according to embodiments. Figures 19 and 20 show a side view. Figures 21 and 22 show a top view.

The vehicle 500 comprises the tractor 501 and the separate trailer 502. In particular, the tractor 501 and the trailer 502 are not directly connected to each other and provide no truck bed. Figures 19 to 22 show the adaptors of the tractor 501 and the trailer 502 to couple the transportation tool 200 and the vehicle 500 with each other. The vehicle 500 comprises additional parts like a truck with wheels for moving the tractor 501 and wheels for the trailer 502. The vehicle 500 with the tractor 501 and the trailer 502 can, for example, also be used to transport other parts of the wind turbine, such as parts of the tower 102.

After fixing the transportation tool 200 to the rotor hub 112 as explained above, the vehicle 500 is connected to the transportation tool 200. For example, the tractor 501 is connected to the first fastener 300. The tractor 501 engages the recesses 323 of the coupling part 320. For example, the tractor 501 comprises the mounting adapters 503. The mounting adapters 503 are configured to engage the recesses 323 of the coupling part 320. For example, the mounting adapters 503 can be raised and lowered to be adapted to the first fastener 300. Alternatively or in addition, for example, the mounting adapters 503 can be raised and lowered along the third direction 123 to raise and lower the rotor hub 112 relative to the ground.

The trailer 502 is connected to the second fastener 400. The trailer 502 engages the further recesses 423 of the further coupling part 420. For example, the trailer 502 comprises the further mounting adapters 504. The further mounting adapters 504 are configured to engage the further recesses 423 of the further coupling part 420. For example, the further mounting adapters 504 can be raised and lowered to be adapted to the second fastener 400. Alternatively or in addition, for example, the further mounting adapters 504 can be raised and lowered along the third direction 123 to raise and lower the rotor hub 112 relative to the ground. In particular, the mounting adapters 503 and the further mounting adapters 504 are moved together to raise and lower the rotor hub 112.

For example, the mounting adapters 503 comprise each a mounting clamp and additional components. The mounting clamp is configured to directly engage the recess 323 or the further recesses 423. For example, the mounting clamp is coupled to the additional components and the additional components are configured to raise and lower the mounting clamps. For example, the additional components are additionally configured to couple the mounting adapter 503 to the vehicle 500.

The transportation tool 200 enables an adaptor transport for a rotor hub 112. Clamps of the tractor 501 and clamps of the trailer 502 are configured to hook onto the transportation tool 200 and lift it to lift the rotor hub 112. The transportation tool 200 enables the adapter transport despite the triangular shape of the rotor hub 112. The first fastener 300 and the second fastener 400 act as intermediate devices between the rotor hub 112 itself and the clamps of the tractor 501 and the clamps of the trailer 502.

The first fastener 300 is configured to be attached to the outside 115, in particular to the mechanized area which is already provided at the rotor hub 112. The second fastener 400 is configured to be attached to the opposite side so that the rotor hub 112 can be lifted on both sides.

The second fastener 400 according to the different embodiments is fixed to the reinforcement ring 117. The second fastener 400 comprises the X-shaped fixing bars 411 according to embodiments. The fixing bars 411 can be extended and retracted to be secured on the inner ring 117 and demounted. The bolts 416 and the support beam 417 according to further embodiments use the smaller through holes 118 in the reinforcement ring 117. In particular, the coupling part 320 of the first fastener 300 and the further coupling part 420 of the second fastener 400 are configured to be compatible with current adaptor vehicle systems from Goldhofer, Nootaboom and Scheuerle. The saved loading height due to the avoidance of the truck bed enables more design space for the rotor hub 112 and for example larger blade root diameters. It increases flexibility in the logistics because it enables the use of a common trailer technology. The transportation tool 200 can also be used in a retrofit manner to transport rotor hubs 112 which were not originally intended for such transportation.

The first fastener 300 and the second fastener 400 comprise steel or are made out of steel. Loading and unloading from the vehicle 500 are possible without a crane. Larger transport dimensions are possible. Height is saved because there is no truck bed or cargo floor between the ground and the rotor hub 112. The rotor hub 112 can be lowered or raised depending on route conditions. Components can be raised over obstacles such as railings or pedestrian walkways. Thus, a larger width can be transported. An increased component weight is possible because the adaptor system is lighter than the comparable trailer technology with a truck bed.

A larger rotor hub 112 also provides more space for internal components of the rotor hub 112. The transportation tool 200 can be combined with a slim transport frame at the bottom of the rotor hub 112 in the position of transport.

### References

100 wind turbine
102 tower
104 foundation
106 nacelle
108 rotor
110 rotor blade
112 rotor hub
113 first side
114 second side
115 outside
116 inside
117 reinforcement element
118 through hole
119 opening for fixing a rotor blade
120 inner ring wall
121 first direction
122 second direction
123 third direction
124 centre opening
200 transportation tool
300 first fastener
301 distance
302 screw connection
310 fixing part
311 through opening
320 coupling part
321, 322 crossbar
323 recess
330 connecting part
400 second fastener
410 further fixing part
411 fixing bar
412 length
413 groove
414 first end
415 second end
416 bolt
417 support beam
418 locking pin
419 bar
420 further coupling part
421, 422 further crossbar
423 further recess
430 further connecting part
500 vehicle
501 tractor
502 trailer
503 mounting adapter
504 further mounting adapter
600 transportation arrangement
700 transportation system

## Claims

1. A transportation tool (200) for a rotor hub (112) of a wind turbine (100), comprising:
- a first fastener (300), the first fastener (300) being configured to be fixed to a first side (113) of the rotor hub (112) and to be coupled with a vehicle (500),
- a second fastener (400), the second fastener (400) being configured to be fixed to a second side (114) of the rotor hub (112) and to be coupled with the vehicle (500), wherein the second side (114) is opposite the first side (113) along a first direction (121), wherein the first fastener (300) and the second fastener (400) are fixable to the rotor hub (112) independently of each other.

2. The transportation tool according to the preceding claim, wherein the first fastener (300) is fixable to an outside (115) of the rotor hub (112).

3. The transportation tool according to any one of the preceding claims, wherein the first fastener (300) comprises:
- a fixing part (310) for fixing the first fastener (300) to the rotor hub (112),
- a coupling part (320) for coupling the first fastener (300) with the vehicle (500), and
- a connecting part (330), wherein the connecting part (330) is attached to the fixing part (310) and to the coupling part (320), wherein the fixing part (310) and the coupling part (320) are arranged at a distance (301) from each other along the first direction (121) with the connecting part (330) between the fixing part (310) and the coupling part (320).

4. The transportation tool according to the preceding claim, wherein the coupling part (320) comprises two spaced-apart crossbars (321, 322), each with recesses (323) to be coupled to the vehicle (500).

5. The transportation tool according to any one of the preceding claims, wherein the first fastener (300) and the rotor hub (112) are fixable to each other by a screw connection (302).

6. The transportation tool according to any one of the preceding claims, wherein the second fastener (400) is fixable to an inside (116) of the rotor hub (112).

7. The transportation tool according to any one of the preceding claims, wherein the second fastener (400) comprises:
- a further fixing part (410) for fixing the second fastener (400) to the rotor hub (112), and
- a further coupling part (420) for coupling the second fastener (400) with the vehicle (500).

8. The transportation tool according to claim 7, wherein the further fixing part (410) comprises a fixing bar (411), wherein the fixing bar (411) comprise an adjustable length (412), such that the fixing bar (411) is movable relative to the rotor hub (112) in a shortened state and is fixable to the rotor hub (112) in an extended state.

9. The transportation tool according to claims 7 or 8, wherein the fixing bar (411) comprises a groove (413) at each end (414, 415) to engage a reinforcement element (117) of the rotor hub (112).

10. The transportation tool according to any one of claims 7 to 9, wherein the further fixing part (410) comprises a bolt (416), the bolt (416) being configured to penetrate through a reinforcement element (117) of the hub and to be fixed to the reinforcement element (117).

11. The transportation tool according to the preceding claim, wherein the further fixing part (410) comprises a support beam (417), the support beam (417) being attachable to the bolt (416) to fix the support beam (417) to the rotor hub (112), wherein the support beam (417) is coupled to the further coupling part (420).

12. A transportation arrangement for a rotor hub (112) of a wind turbine (100), comprising:
- a transportation tool (200) according to any one of the preceding claims, and
- a vehicle (500), the vehicle (500) comprising a tractor (501) and a trailer (502), wherein the first fastener (300) is attached to one of the tractor (501) and the trailer (502) and/or the second fastener (400) is attached to other one of the tractor (501) and the trailer (502).

13. A transportation system for a rotor hub (112) of a wind turbine (100), comprising:
- a transportation tool (200) according to any one claims 1 to 11, and
- the rotor hub (112), wherein the first fastener (300) is fixed to the rotor hub (112) and/or the second fastener (400) is fixed to the rotor hub (400).

14. The transportation system according to claim 13, comprising the transportation tool (200) according to claims 8 or 9, wherein the fixing bar (411) extends transverse to an opening (119) for mounting a rotor blade (110).

15. A method for attaching a transportation tool (200) to a rotor hub (112) of wind turbine (100), comprising:
- fixing a first fastener (300) to a first side (113) of the rotor hub (112), and
- fixing a second fastener (400) to a second side (114) of the rotor hub (112), wherein the second side (114) is opposite the first side (113) along a first direction (121), wherein the fixing of the first fastener (300) and the fixing of the second fastener (300) are independent of each other.
